# EUROPÄISCHE PATENTANMELDUNG

(11) **EP 2 042 473 A2**
(43) Veröffentlichungstag der Anmeldung: **01.04.2009**
(21) Anmeldenummer: 08164862.8
(22) Anmeldetag: 23.09.2008
(51) Int. Cl.: C02F 3/30, C02F 101/16

(54) **Zusammensetzung und Verfahren für die biologische Denitrifizierung von Abwässern**

(30) Priorität: 26.09.2007 DE 102007046188
(71) Anmelder: Brenntag Holding GmbH, 45472 Mülheim an der Ruhr (DE)
(72) Erfinder: Dettmers, Harald, 30900 Wedemark (DE); Engehausen, Henning, 21079 Hamburg (DE); Eppels, Stefan, 41844 Wegberg (DE); Krück, Joachim, 66892 Bruchmühlbach-Miesau (DE); Schuh, Jörg, 54293 Trier (DE)
(74) Vertreter: Viering, Jentschura & Partner

(57) **Zusammenfassung**

Die vorliegende Erfindung betrifft Zusammensetzungen zur biologischen Abwasserreinigung, insbesondere zur biologischen Denitrifizierung von Abwässern, wobei diese Zusammensetzungen als Kohlenstoffquelle für denitrifizierende Mikroorganismen Glycerin und Melasse enthalten, Verfahren zur Abwasserreinigung, in denen diese Zusammensetzungen verwendet werden, und die Verwendung dieser Zusammensetzungen in Verfahren zur Abwasserreinigung.

## Beschreibung

Die vorliegende Erfindung betrifft Zusammensetzungen zur biologischen Abwasserreinigung, insbesondere die biologische Denitrifizierung von Abwässern, wobei diese Zusammensetzungen Glycerin und Melasse als Kohlenstoffquelle für denitrifizierende Mikroorganismen enthalten, sowie Verfahren zur Abwasserreinigung, in denen diese Zusammensetzungen verwendet werden.

In Abwässern oder Klärschlämmen enthaltene natürliche oder synthetische organische Abfallstoffe werden in der Regel über biologische Abwasserreinigungsverfahren entfernt. Diese verwenden Mikroorganismen, die die Abfallstoffe unter aeroben Bedingungen über oxidative Stoffwechselwege zersetzen und/oder entgiften. Dabei wird insbesondere Ammonium zu Nitrit und/oder Nitrat oxidiert. Daneben werden auch Schwefel- und Phosphorverbindungen zu den entsprechenden Oxiden, d.h. in der Regel Sulfaten und Phosphaten, oxidiert. Die entstehenden Salze führen aber zu der Absenkung des pH-Wertes und zur Eutrophierung, was wiederum das Wachstum von Algen und Moosen begünstigt und zur Verschlechterung der Wasserqualität führt. Die Anreicherung insbesondere von Nitraten im Wasser ist ein schweres Problem bei der langfristigen Sicherstellung der Wasserqualität.

Grundsätzlich kann zwar eine Verminderung der Stickstoffkonzentration in Abwässern durch Ammoniumstripping oder sonstige Fällungsreaktionen erreicht werden, jedoch sind solche Verfahren kostenintensiv und aufwendig. Gesetzliche Bestimmungen, die eine Obergrenze für den Gehalt an anorganischen Stickstoffverbindungen in Abwässern festlegen, machen aber eine gezielte Stickstoffeliminierung erforderlich. Aus diesem Grund ist es bisher bereits bekannt durch gewisse Vorklärungen den Stickstoffgehalt zu senken oder zur Eliminierung des Stickstoffs eine mikrobielle Denitrifikation durchzuführen.

Die mikrobielle Denitrifikation basiert auf der Tatsache, dass Mikroorganismen unter bestimmten Bedingungen in der Lage sind, Nitrate und Nitrite reduktiv abzubauen. Dabei wird der in den Abwässern im Wesentlichen in Form von Nitrat und Nitrit enthaltene Stickstoff von Mikroorganismen auf zwei unterschiedliche Arten verwendet. Zum einen kann er als Stickstoffquelle zur Synthese von Stickstoff-haltigen Zellbestandteilen verwendet werden. Diese sogenannte assimilatorische Nitratreduktion kann dabei unter aeroben wie auch anaeroben Bedingungen ablaufen. Zum anderen kann Nitrat unter anaeroben Bedingungen über die dissimilatorische Nitratreduktion als terminaler Elektronen-Akzeptor (Oxidationsmittel) dienen, so dass der im Abwasser enthaltene Stickstoff letztlich gasförmig in die Atmosphäre abgegeben werden kann und damit in dem Abwasser nicht mehr verfügbar und nicht mehr umweltrelevant ist.

Die dissimilatorische Nitratreduktion erfolgt durch bestimmte heterotrophe und einige autotrophe Bakterien (Denitrifizierer). Die einzelnen Schritte der mehrstufigen Reaktion werden durch die Metalloenzyme Nitratreduktase, Nitritreduktase, Stickstoffmonoxid-Reduktase und Distickstoffmonoxid-Reduktase katalysiert.
1. Nitratreduktase: 2 NO₃⁻ + 4 H⁺ + 4 e⁻ → 2 NO₂⁻ + 2 H₂O
2. Nitritreduktase : 2 NO₂⁻ + 4 H⁺ + 2 e⁻ → 2 NO + 2 H₂O
3. Stickstoffmonoxid-Reduktase: 2 NO + 2 H⁺ + 2 e⁻ → N₂O + H₂O
4. Distickstoffmonoxid-Reduktase: N₂O + 2 H⁺ + 2 e⁻ → N₂ + H₂O

Da die Redox-Potentiale aller Einzelschritte der Denitrifikation positiv sind, können diese Bakterien Nitrat als Elektronenakzeptor für ihren oxidativen Energiestoffwechsel nutzen, wenn kein oder nur begrenzt gelöster molekularer Sauerstoff (O₂) verfügbar ist (anoxische/hypoxische Verhältnisse).

In der Natur findet dieser Prozess überall statt, wo Nitrat und durch Denitrifizierer oxidierbare organische Stoffe unter anoxischen oder hypoxischen Bedingungen zur Verfügung stehen (z. B. Sümpfe, Böden, Sedimente in Flüssen und Seen). Von bestimmten Bakterien können auch molekularer Wasserstoff (H₂), Schwefelwasserstoff (H₂S), Ammonium (NH₄⁺) sowie Eisen(II)-Ionen (Fe²⁺) mit Nitrat (NO₃⁻) unter Bildung von molekularem Stickstoff (N₂) oxidiert werden.

Die dissimilatorische Nitratreduktion ist für die biologische Denitrifikation von Abwässern erwünscht, da sie die Beseitigung des im Abwasser als Nitrat enthaltenen Stickstoffs ermöglicht, wobei der Stickstoff in Form von gasförmigem Stickstoff oder Stickoxid in die Atmosphäre abgegeben wird.

Um die dissimilatorische Nitratreduktion durchzuführen, benötigen die entsprechenden Mikroorganismen allerdings Energie in Form organischer Kohlenstoffquellen.

Es ist bekannt, dass die Menge der biologisch abgebauten Stickstoff-haltigen Verunreinigungen von dem Verhältnis zwischen vorhandenem Kohlenstoff und Stickstoff abhängt (C/N Verhältnis). Das heißt, die Gesamtstickstoffmenge, die über den mikrobiellen Stoffwechsel oxidiert/reduziert wird, insbesondere die Abbaurate von Stickoxiden wie Nitrit und Nitrat, hängt von der Konzentration der organischen Kohlenstoffquellen in der sauerstoffarmen Zone ab, in der die anaeroben Mikroorganismen leben. Im Allgemeinen ist das optimale C/N Verhältnis um den mikrobiellen Stoffwechsel in den aktiven Fermentationszustand zu überführen 6 oder mehr.

Es ist daher von großer Bedeutung, dass für die Denitrifizierung von Abwässern zusätzlich organische Kohlenstoffquellen zugegeben werden.

Für die gezielte gleichmäßige Stickstoffeliminierung werden deshalb externe Kohlenstoffverbindungen als Reduktionsmittel (Wasserstoff-Donoren) verwendet, die kontinuierlich dosiert, d.h. in Abhängigkeit des Nitratgehalts, zugegeben werden müssen.

Als organische Kohlenstoffquellen werden üblicherweise niederwertige Alkohole, wie Methanol oder Ethanol eingesetzt. Diese haben allerdings den Nachteil, dass durch ihren Abbau auch unerwünschte Nebenprodukte, wie Acetaldehyd und Formaldehyd entstehen, die negative Auswirkungen auf die Wasserqualität haben und mittels aufwendiger Verfahren entfernt werden müssen. Zudem haben die Alkohole den Nachteil, leicht entzündlich und, im Fall von Methanol, auch toxisch zu sein.

Ebenfalls bekannt ist die Verwendung mehrwertiger Alkohole wie Ethylenglykol oder Glycerin (Propantriol). Glycerin hat allerdings auch in seiner handelsüblichen Form, d.h. als 85 %-ige Mischung mit Wasser, eine sehr hohe Viskosität, was die Pumpfähigkeit bei niedrigen Temperaturen negativ beeinflusst und die Dosierung erschwert. Zudem ist die Abbaugeschwindigkeit von Nitrat im Vergleich zu anderen Substanzen deutlich geringer. Glycerin hat gegenüber anderen Verbindungen allerdings den Vorteil, dass es einen hohen biologisch verfügbaren CSB-Gehalt (Depotfunktion) besitzt, frei von Stickstoff, pH neutral und kein Gefahrstoff ist. Zudem ist Glycerin ganzjährig und als nachwachsender Rohstoff auch in großen Tonnagen verfügbar und weist ein günstiges Preis/CSB-Gehalt Verhältnis auf.

Der Chemische Sauerstoffbedarf (CSB) ist eine nach einem genormten Verfahren ermittelte Kenngröße für den Verschmutzungsgrad von Gewässern und Abwässern insbesondere mit organischen Verunreinigungen. Hierzu bestimmt man den Verbrauch der Wasserprobe an Kaliumdichromat als Oxidationsmittel. Die Reaktion wird in saurer Lösung in Gegenwart von Silbersulfat und Maskierung von Chlorid-Ionen durchgeführt. Da die externen Kohlenstoffquellen zur reduktiven Entfernung von Stickstoff eingesetzt werden, ist ein hoher CSB-Gehalt wünschenswert.

Eine andere bekannte Kohlenstoffquelle, die für die Nitratreduktion in Abwässern eingesetzt wird, ist Melasse. Melasse ist ein Nebenprodukt der Zuckerherstellung und enthält 40-50% Zucker, die nicht mehr kristallisiert werden können. Bei diesen Zuckern handelt es sich im Wesentlichen um Saccharose, aber auch Glucose und Fructose. Daneben enthält Melasse Mineralien, wie beispielsweise Calcium, Magnesium, Kalium und Eisen, Vitamine und Proteine.

Melasse in üblicher Form, d.h. als wasserhaltiger Zuckersirup, hat ebenfalls einen ungünstigen Viskositätsverlauf, was die automatisch dosierte Zugabe erschwert. Stärkere Verdünnungen mit Wasser führen zu einer schnellen Verderblichkeit der Melasse. Melasse hat zudem den Nachteil eines relativ hohen Gesamtstickstoffgehalts, der unter anderem aus den in der Melasse vorhandenen Proteinen stammt, und eines relativ niedrigen CSB-Gehalts.

Die Vorteile von Melasse liegen darin, dass sie einen sehr schnell verfügbaren CSB-Gehalt (Starterfunktion) besitzt und dass sie kein Gefahrstoff ist. Des Weiteren ist Melasse ganzjährig und als nachwachsender Rohstoff auch in großen Tonnagen verfügbar und weist ein günstiges Preis/CSB-Gehalt Verhältnis auf.

Weitere als externe Kohlenstoffquellen bekannte und eingesetzte Verbindungen sind Stärke, Essigsäure und deren Salze (Acetate), Methan und Erdgas.

Diese haben aber ebenfalls die Nachteile Gefahrstoffe, nicht pH neutral, schwer dosierbar, nicht in ausreichender Menge verfügbar, kein nachwachsender Rohstoff und/oder teuer zu sein.

Es ist daher Aufgabe der vorliegenden Erfindung, eine neue Zusammensetzung zu finden, die als externe Kohlenstoffquelle für die biologische Denitrifikation von Abwässern geeignet und gleichzeitig gefahrlos und kostengünstig einsetzbar ist und die die Nachteile der bekannten Kohlenstoffquellen überwindet.

Diese Aufgabe wird durch die in Anspruch 1 beschriebene Zusammensetzung für die biologische Denitrifikation von Abwässern gelöst, die als wesentliche Bestandteile Melasse und Glycerin (Glycerol, Propantriol) enthält.

Die Zusammensetzungen der Erfindung sind zum Einsatz bei der Abwasserbehandlung, insbesondere der mikrobiellen Denitrifikation geeignet und zeichnen sich dadurch aus, dass sie als Hauptbestandteile Glycerin und Melasse enthalten. Des Weiteren enthalten sie variablen Mengen an Wasser. Das Wasser dient dabei insbesondere dazu die Viskosität der Zusammensetzung zu regulieren und damit die Dosierfähigkeit zu gewährleisten. Das ist insbesondere deshalb von Bedeutung, da die Zugabe der Kohlenstoffquellen in der Regel - abhängig von dem Nitratgehalt der Abwässer - automatisch über eine Dosierpumpvorrichtung erfolgt.

Die Begriffe "Denitrifikation" und "Denitrifizierung" werden hierin austauschbar verwendet, um den Prozess der Stickstoffeliminierung zu bezeichnen. "Mikrobielle Denitrifikation" oder "biologische Denitrifikation" bezeichnet die Stickstoffeliminierung mit Hilfe von Mikroorganismen.

Die vorliegende Erfindung betrifft insbesondere Zusammensetzungen, die dadurch gekennzeichnet sind, dass sie 7 bis 67 Vol.-% Glycerin, 3 bis 62 Vol.-% Melasse, 30 bis 32 Vol.-% Wasser und 0 bis 5, 0 bis 2 oder 0 bis 1 Vol.-% Zusatzstoffe enthalten. In den erfindungsgemäßen Zusammensetzungen ergibt die Summe der Bestandteile zusammengenommen 100 Vol.-%.

In einer anderen Ausführungsform enthalten die Zusammensetzungen 10 bis 60 Vol.-% Glycerin, 10 bis 60 Vol.-% Melasse, 30 bis 32 Vol.-% Wasser und 0 bis 5, 0 bis 2 oder 0 bis 1 Vol.-% Zusatzstoffe.

In noch einer anderen Ausführungsform enthalten die Zusammensetzungen 20 bis 50 Vol.-% Glycerin, 20 bis 50 Vol.-% Melasse, 30 bis 32 Vol.-% Wasser und 0 bis 5, 0 bis 2 oder 0 bis 1 Vol.-% Zusatzstoffe.

In einer weiteren Ausführungsform enthalten die erfindungsgemäßen Zusammensetzungen 30 bis 45 Vol.-% Glycerin, 30 bis 45 Vol.-% Melasse, 30 bis 32 Vol.-% Wasser und 0 bis 5, 0 bis 2 oder 0 bis 1 Vol.-% Zusatzstoffe.

Die in der Zusammensetzung enthaltenen Zusatzstoffe können beispielsweise Duftstoffe, Tenside, Konservierungsmittel und Emulgatoren oder Mischungen davon sein. Geeignete Duftstoffe sind beispielsweise Terpene, insbesondere Citrusterpene (Limonen).

Anstelle von Glycerin können alternativ auch andere mehrwertige Alkohole, wie z.B. Glykol (Ethandiol) eingesetzt werden.

Überraschenderweise haben die Erfinder der vorliegenden Erfindung gefunden, dass sich die beanspruchten Mischungen gegenüber bekannten Zusammensetzungen sowie den Einzelkomponenten Glycerin und Melasse durch eine Reihe von vorteilhaften Eigenschaften auszeichnen und gleichzeitig die genannten Nachteile der Einzelkomponenten überwinden.

Die Zusammensetzungen gemäß der Erfindung zeichnen sich gegenüber Mischungen mit höheren Glycerin-Anteilen bzw. reinen Glycerin-Wasser Mischungen durch eine um mindestens 20% erhöhte Nitratabbaurate aus. Des Weiteren haben die Zusammensetzungen der Erfindung gegenüber Mischungen mit höherem Melasseanteil bzw. reinen Melasse-Wasser Mischungen den Vorteil, dass sie einen höheren CSB-Gehalt und einen niedrigeren Stickstoffgehalt haben. Des Weiteren haben die Zusammensetzungen der Erfindung den Vorteil eines günstigeren Viskositätsverlaufs als die Einzelkomponenten, was insbesondere für die Handhabbarkeit und Dosierung von Bedeutung ist.

Die vorliegende Erfindung richtet sich ebenfalls auf ein Verfahren zur biologischen Denitrifizierung von Abwässern, wobei das Verfahren dadurch gekennzeichnet ist, dass als Kohlenstoffquelle eine Zusammensetzung gemäß der vorliegenden Erfindung verwendet wird. Verfahren zur biologischen Denitrifizierung von Abwässern sind dem Fachmann bekannt.

Ferner betrifft die Erfindung auch die Verwendung der erfindungsgemäßen Zusammensetzungen in Verfahren zur biologischen Denitrifikation von Abwässern. Solche Verfahren werden beispielsweise in Kläranlagen oder Anlagen zur Trinkwasseraufbereitung verwendet.

"Abwässer" in Sinne der vorliegenden Erfindung bezieht sich auf industrielle und kommunale Abwässer, sowie Wasser/Abwasser aus Deponien (z.B. Sickerwasser), Trinkwasseraufbereitungsanlagen und Prozesswasserkreisläufen (z.B. aus der Papierindustrie).

Die Erfindung wird durch die folgenden Beispiele genauer beschrieben.

### Beispiele

### Beispiel 1: Messung der Denitrifikationsgeschwindigkeit bei Verwendung verschiedener Glycerin/Melassemischungen

### Material

| | |
|---|---|
| Biomasse: | Kläranlage Oerbke, keine C-Quelle im Einsatz. |
| NO₃-LÖsung: | Stammlösung als 5000 mg_{NO3-N} / 1. |
| Melasse: | 68% TS (Zuckergehalt 40%), 32% H₂O |
| Rohglycerin: | 70% Glycerin, 30% H₂O |
| Mischung 1: | Melasse : Rohglycerin 80:20 |
| Mischung 2: | Melasse : Rohglycerin 50:50 |
| Mischung 3: | Melasse : Rohglycerin 20:80 |
| Mischung 4: | Melasse : Rohglycerin 10:90 |
| Gefäße: | 200 ml Erlenmeyerkolben mit Verschluss |
| Nitratmessung: | Hach-Lange (LCK340) |
| Nitritmessung: | Hach-Lange (LCK342) |
| Photometer: | Hach-Lange Lasa 100 |
| Zentrifuge: | Hettich EBA 3S |

### Versuchsdurchführung

199 g Belebtschlamm aus der Biologie der Kläranlage Oerbke wurden in Erlenmeyer-Kolben eingewogen. Die Biomasse war an keine Kohlenstoffquelle adaptiert. Der Biomassegehalt betrug ca. 2,8 g/l. Danach wurden 25 µl der Glycerin/Melassemischungen zugegeben. Zum Start des Abbaus wurde 1 ml der NO₃-Stammlösung (5 mg NO₃) zugesetzt. Die Referenzprobe enthielt nur Biomasse und NO₃-Stammlösung ohne C-Quelle. Gemessen wurde die NO₃-Abnahme unter anoxischen Bedingungen

Die Biomasse wurde durch vorsichtiges Umschwenken in Schwebe gehalten. Nach 30 Minuten und danach alle 15 Minuten wurden 2 ml Probe abgenommen und 5 Minuten bei 6000 U/min zentrifugiert. Um die Sedimentation zu beschleunigen wurden zuvor 20 µl einer 0,05%igen Lösung von Praestol 855BS zugesetzt.

Nach dem zentrifugieren wurde der Überstand dekantiert. Anschließend wurden die NO₂ und NO₃ Konzentrationen mit Hilfe photometrischer Tests (Hach-Lange LCK340 und LCK342) bestimmt.

Ein Einfluss des Praestols und der C-Quellen auf den photometrischen Test waren durch Vorversuche ausgeschlossen worden.

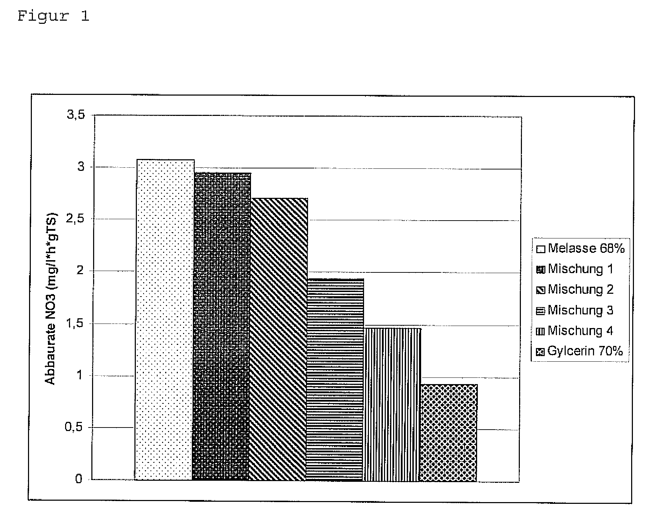

Nach Abschluss der Messungen wurde die Abbauraten durch graphische Auftragung der bestimmten NO₃-Konzentrationen gegen die Zeit und die Berechnung der Steigung der Regressionsgeraden bestimmt. Die berechneten NO₃-Abbauraten der unterschiedlichen Melasse/Glycerin-Mischungen sind in Figur 1 dargestellt.

### Beispiel 2: Messung der Viskosität

### Material

| | |
|---|---|
| Melasse: | 68%TS, Zuckergehalt 40% |
| Rohglycerin: | 85% Glycerinanteil |
| Wasser: | Stadtwasser Duisburg |
| Thermometer: | elektrisch |
| Kühlschrank | Labor Duisburg (4 Sterne) |
| Gefäss: | 500 ml Becherglas |
| Viskosimeter: | Brookfield Viskosimeter DV-E RV Version 1.0 |
| Spindel: | S 85 |

### Versuchsdurchführung

Die zu messenden Rohprodukte und deren Abmischungen wurden gemischt und im Anschluss temperiert (gekühlt).

Die Spindeltypen wurden in Abhängigkeit der zu erwartenden Viskositäten gewählt, die zu messende Flüssigkeit in einem geeigneten Gefäss vorgelegt und die Spindel in die Flüssigkeit getaucht.

Mit Hilfe eines elektrischen Thermometers wurde die Temperatur der Flüssigkeit bestimmt und, ausgehend von den tiefsten Temperaturen (-18 Grad Celsius), kontinuierlich der Viskositätsverlauf gemessen.

Die Umdrehungszahl der Spindel war variable und wurde so gewählt das der Messbereich des Viskosimeters im optimalen Bereich lag.

Aus den aufgenommenen Messwerten wurde eine Kurve erstellt, die den Viskositätsverlauf in Abhängigkeit von der Temperatur zeigt.

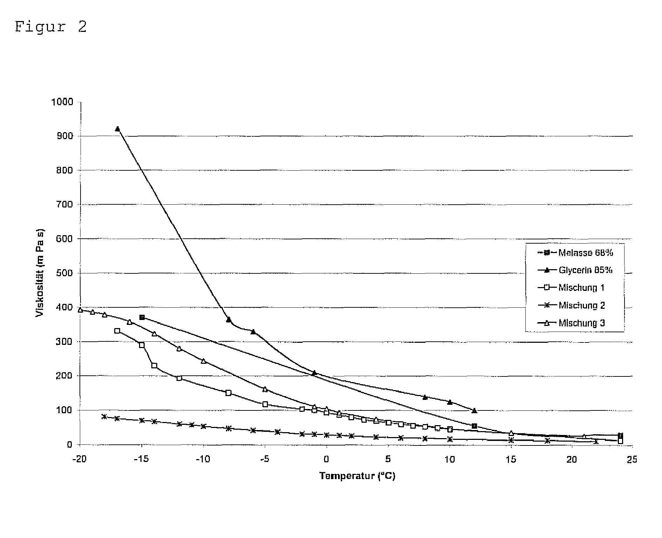

Es wurden die Viskositäten von Mischungen von Glycerin und Wasser im Verhältnis 85:15, Melasse und Wasser im Verhältnis 68:32 und Glycerin (70%), Melasse (68%) und Wasser im Verhältnis 50:50:0 (Mischung 1), 80:5:15 (Mischung 2) und 8:90:2 (Mischung 3) bestimmt. Die Ergebnisse der Messungen sind in Figur 2 dargestellt.

## Patentansprüche

1. Zusammensetzung zur Abwasserbehandlung, **dadurch charakterisiert, dass** die Zusammensetzung Glycerin und Melasse enthält.

2. Zusammensetzung nach Anspruch 1, **dadurch charakterisiert, dass** die Zusammensetzung 7 bis 67 Vol.-% Glycerin, 3 bis 62 Vol.-% Melasse, 30-32 Vol.-% Wasser und 0-5 Vol.-% Zusatzstoffe enthält, wobei die Bestandteile zusammengenommen 100 Vol.-% ergeben.

3. Zusammensetzung nach Anspruch 2, **dadurch charakterisiert, dass** die Zusammensetzung 10 bis 60 Vol.-% Glycerin, 10 bis 60 Vol.-% Melasse, 30-32 Vol.-% Wasser und 0-5 Vol.-% Zusatzstoffe enthält, wobei die Bestandteile zusammengenommen 100 Vol.-% ergeben.

4. Zusammensetzung nach Anspruch 3, **dadurch gekennzeichnet, dass** die Zusammensetzung 20-50 Vol.-% Glycerin, 20-50 Vol.-% Melasse, 30-32 Vol.-% Wasser und 0-5 Vol.-% Zusatzstoffe enthält, wobei die Bestandteile zusammengenommen 100 Vol.-% ergeben.

5. Zusammensetzung nach Anspruch 4, **dadurch gekennzeichnet, dass** die Zusammensetzung 30-45 Vol.-% Glycerin, 30-45 Vol.-% Melasse, 30-32 Vol.-% Wasser und 0-5 Vol.-% Zusatzstoffe enthält, wobei die Bestandteile zusammengenommen 100 Vol.-% ergeben.

6. Zusammensetzung nach einem der Ansprüche 1-5, **dadurch gekennzeichnet, dass** die Zusatzstoffe ausgewählt werden aus Duftstoffen, Tensiden, Konservierungsmitteln und Emulgatoren.

7. Zusammensetzung nach Anspruch 6, **dadurch gekennzeichnet, dass** es sich bei den Duftstoffen um Terpene handelt.

8. Verfahren zur biologischen Denitrifizierung von Abwässern, **dadurch gekennzeichnet, dass** als Kohlenstoffquelle eine Zusammensetzung nach einem der Ansprüche 1-7 eingesetzt wird.

9. Verfahren nach Anspruch 8, **dadurch gekennzeichnet, dass** es sich bei den Abwässern um nitrat- und/oder nitrithaltige industrielle oder Haushaltsabwässer handelt.

10. Verwendung einer Zusammensetzung nach einem der Ansprüche 1-7 für die biologische Denitrifikation von Abwässern.

11. Verwendung nach Anspruch 10, **dadurch gekennzeichnet, dass** es sich bei den Abwässern um nitrat- und/oder nitrithaltige industrielle oder kommunale Abwässer sowie Wasser/Abwasser aus Deponien (z.B. Sickerwasser), Trinkwasseraufbereitungsanlagen und Prozesswasserkreisläufen (z.B. aus der Papierindustrie) handelt.
